# EUROPÄISCHE PATENTSCHRIFT

(11) **EP 2 374 666 B1**
(45) Veröffentlichungstag und Bekanntmachung des Hinweises auf die Patenterteilung: **23.10.2013**
(21) Anmeldenummer: 11001796.9
(22) Anmeldetag: 03.03.2011
(51) Int. Cl.: B60R 19/34

(54) **Verbindungsanordnung von wenigstens zwei Strukturbauteilen für einen Kraftwagen sowie Verfahren zu deren Herstellung**
Connection assembly with at least two structural components for a motor vehicle and method for producing same
Agencement de liaison d'au moins deux composants structurels pour un véhicule automobile et son procédé de fabrication

(30) Priorität: 10.04.2010 DE 102010014513
(43) Veröffentlichungstag der Anmeldung: 12.10.2011
(73) Patentinhaber: Daimler AG, 70327 Stuttgart (DE)
(72) Erfinder: Reese, Eckhard, 21641 Apensen (DE)
(74) Vertreter: JENSEN & SON

(56) Entgegenhaltungen:
- DE-A1- 10 156 655
- DE-A1-102008 038 276

## Beschreibung

Die Erfindung betrifft eine Verbindungsanordnung von einem Stoßfängerquerträger und wenigstens einem Energieabsorptionselement, für einen Kraftwagen der im Oberbegriff des Patentanspruchs 1 angegebenen Art. Des Weiteren betrifft die Erfindung ein Verfahren zur Herstellung einer solchen Verbindungsanordnung gemäß Patentanspruch 9.

Eine derartige Verbindungsanordnung ist beispielsweise bereits aus der EP 1 426 241 B1 als bekannt zu entnehmen, bei welcher ein Strukturbauteil in Form eines Stoßfängerquerträgers mit zwei Strukturbauteilen in Form von Energieabsorptionselementen verbunden ist. Der Stoßfängerträger weist dabei jeweilige Stecköffnungen auf, in welche das korrespondierende Energieabsorptionselement einsteckbar ist. Hierzu umfasst der Stoßfängerquerträger im Bereich der Stecköffnung einen jeweiligen umlaufenden bzw. hülsenartigen Wandbereich, welcher mit einem korrespondierenden jeweiligen Wandbereich des entsprechenden Energieabsorptionselements flächig in Anlage ist.

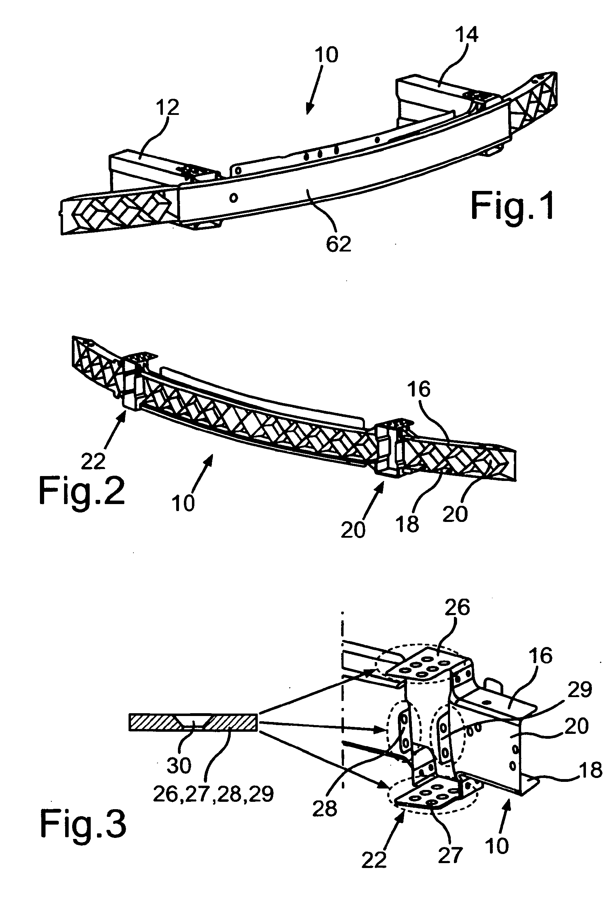

Die DE 101 56 655 A1 zeigt einen Stoßfängerbiegeträger, der als Hohlprofil ausgebildet und mit einem Pralldämpfer verbunden ist. Hierzu werden verschiedene Ausführungsformen offenbart. Die Figuren 1-3 offenbaren einen Stoßfängerbiegeträger, der durch seinen domförmigen Abschnitt 4 bereits einen Teil des Pralldämpfers, also eines Energieabsorptionselements selbst einstückig beinhaltet. Ein zusätzliches Energieabsorptionselement wird in Fig. 1a an dieses direkt angeschraubt oder angenietet. Fig. 1b zeigt eine Einstülpung des Stoßfängerquerträgers, in die das Energieabsorptionselement eingesetzt und mit einem Befestigungselement verbunden wird. Fig. 2 zeigt eine Verschweißung des domförmigen Abschnitts mit dem Energieabsorptionselement, während in Fig. 3 der domförmige Abschnitt in das Energieabsorptionselement eingesteckt ist und dort von diesem formschlüssig umgriffen ist. Die DE 10156655 A1 zeigt eine Verbindungsanordnung gemäß dem Oberbegriff des Anspruchs 1 und ein Verfahren zum Herstellen einer Verbindungsanordnung gemäß dem Oberbegriff des Anspruchs 9.

Aufgabe der vorliegenden Erfindung ist es, eine Verbindungsanordnung sowie ein Verfahren zu deren Herstellung der eingangs genannten Art zu schaffen, mittels welchen sich eine besonders günstige und stabile Verbindung des Stoßfängerquerträgers mit dem Energieabsorptionselement realisieren lässt.

Diese Aufgabe wird erfindungsgemäß durch eine Verbindungsanordnung sowie ein Verfahren zu deren Herstellung mit den Merkmalen der Patentansprüche 1 bzw. 9 gelöst. Vorteilhafte Ausgestaltungen mit zweckmäßigen und nicht-trivialen Weiterbildungen der Erfindung sind in den jeweils abhängigen Patentansprüchen angegeben.

Um eine Verbindungsanordnung der eingangs genannten Art zu schaffen, mittels welcher wenigstens zwei quer zueinander verlaufende Strukturbauteile, nämlich dem Stoßfängerquerträger und dem Energieabsorptionselement besonders günstig miteinander zu verbinden sind, wobei die jeweiligen Wandbereiche der Strukturbauteile über wenigstens eine formschlüssige Verbindung miteinander fest verbunden sind, ist es erfindungsgemäß vorgesehen, dass der jeweilige wenigstens eine Wandbereich des Stoßfängerquerträgers Löcher aufweist und im Bereich dieser Löcher jeweilige formschlüssige Verbindungen ausgebildet sind, welche durch entsprechendes Innenhochdruckumformen bzw. Hydroclinchen des korrespondierenden Wandbereichs des Energieabsorptionselements erzeugt worden sind.

Diese Art von Verbindung zeichnet sich insbesondere dadurch aus, dass sie äußerst genau und reproduzierbar herstellbar und besonders stabil und hochsteif ist. Zudem ergibt sich durch diese Verbindungsart eine Gewichts- und somit eine Kostenreduzierung, da keine zusätzliche mechanischen Verbindungselemente von Nöten sind. Ein weiterer Vorteil ist es, dass die wenigstens eine formschlüssige Verbindung beispielsweise in einem ohnehin erforderlichen Umformprozess eingebracht werden kann, so dass sich wiederum eine besonders kurze Herstellungszeit für die Verbindungsanordnung realisieren lässt. Zudem kann die formschlüssige Verbindung in einem Prozess während des Umformens des Energieabsorptionselements vorgenommen werden.

Eine weitere vorteilhafte Ausführungsform sieht vor, dass der Stoßfängerquerträger einen im Wesentlichen U-förmigen Querschnitt aufweist. Hierdurch ist es beispielsweise möglich, innerhalb des U-förmigen Querschnitts entsprechende Verstärkungen, Aufnahmen, Rippen oder dergleichen insbesondere aus Kunststoff einzubringen.

In weiterer Ausführung der Erfindung ist es vorgesehen, dass die beiden Strukturbauteile im Wesentlichen senkrecht zueinander angeordnet sind. Hierdurch ergibt sich eine besonders günstige Verbindung der beiden Strukturbauteile.

In weiterer Ausgestaltung der Erfindung ist wenigstens ein Strukturbauteil zumindest partiell mit Kunststoff versehen. Hierdurch ergibt sich beispielsweise eine Aussteifung des jeweiligen Strukturbauteils. Des Weiteren können die wenigstens zwei Strukturbauteile über den Kunststoff zusätzlich miteinander verbunden sein, so dass sich insgesamt eine besonders belastungsfähige Verbindung der beiden Strukturbauteile ergibt. Ein weiterer Vorteil eines derartigen Hybridbauteils ist es, dass in den Kunststoff Funktionsbauteile und/oder Funktionsbereiche integriert sein können, die beispielsweise zur Aufnahme, Abstützung, Fixierung oder dergleichen von weiteren Bauteilen dienen können.

In weiterer vorteilhafter Ausgestaltung der Erfindung ist in eine stirnseitige Wand eines der Strukturbauteile eine Gewindenabe für eine Abschleppöse eingebracht. Hierdurch ergibt sich eine besonders günstige Befestigungsstelle für die Abschleppöse. Darüber hinaus kann diese Befestigungsstelle besonders gewichtsgünstig hergestellt werden.

Schließlich hat es sich als vorteilhaft gezeigt, wenn in ein Hohlprofil des Strukturbauteils zumindest partiell eine Versteifung und/oder ein Energieabsorptionselement eingebracht sind. Hierdurch kann entsprechend die Steifigkeit und/oder das Energieabsorptionsvermögen des Bauteils verbessert werden.

Die vorstehend im Zusammenhang mit der erfindungsgemäßen Verbindungsanordnung genannten Vorteile gelten dabei in ebensolcher Weise für das Verfahren gemäß Patentanspruch 9.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1: eine Perspektivansicht auf eine Verbindungsanordnung eines Strukturbauteils in Form eines Stoßfängerquerträgers mit zwei Strukturbauteilen in Form von jeweiligen Energieabsorptionselementen für einen Kraftwagen gemäß der Erfindung;
- Fig. 2: eine Perspektivansicht auf den Stoßfängerträger bei weggelassenen Energieabsorptionselementen, wobei insbesondere jeweilige Stecköffnungen erkennbar sind, in welche die korrespondierenden Energieabsorptionselemente einsteckbar sind, wobei der Stoßfängerquerträger im Bereich der Stecköffnungen jeweilige Wandbereiche aufweist, welche mit korrespondieren Wandbereichen des jeweiligen Energieabsorptionselements in Anlage kommen bzw. über formschlüssige Verbindungen miteinander verbindbar sind;
- Fig. 3: eine ausschnittsweise Perspektivansicht auf den Stoßfängerquerträger gemäß Fig. 2 im Bereich eines der Stecköffnungen sowie eine ausschnittsweise Schnittansicht auf einen der Wandbereiche des Stoßfängerquerträgers im Bereich der Stecköffnung;
- Fig. 4: links oben die Verbindungsanordnung des ausschnittsweise erkennbaren Stoßfängerquerträgers mit einem der Energieabsorptionselemente und rechts unten eine alternative Ausführungsform dieser Verbindungsanordnung;
- Fig. 5: jeweilige Perspektivansichten bzw. Vorderansichten auf die beiden Energieabsorptionselemente, wobei das linke Energieabsorptionselement im Unterschied zum rechten Energieabsorptionselement eine Gewindenabe für eine Abschleppöse aufweist;
- Fig. 6: eine perspektivische Explosionsdarstellung über den Auf- bzw. Zusammenbau des die Gewindenabe für die Abschleppöse umfassenden Energieabsorptionselements gemäß einer zu Fig. 5 alternativen Ausführungsform;
- Fig. 7: eine Mehrzahl von Perspektivansichten des die Gewindenabe für die Abschleppöse umfassenden Energieabsorptionselements;
- Fig. 8: eine Perspektivansicht auf das die Gewindenabe für die Abschleppöse umfassende Energieabsorptionselement, wobei vorliegend die Abschleppöse eingeschraubt ist;
- Fig. 9: eine perspektivische und ausschnittsweise Rückansicht auf die Verbindungsanordnung eines der Energieabsorptionselemente an dem Stoßfängerquerträger mittels Hydroclinchen und mittels von Sicken sowie eine Schnittansicht hierzu;
- Fig. 10: eine Perspektivansicht auf die Verbindungsanordnung des Stoßfängerquerträgers mit den beiden Energieabsorptionselementen;
- Fig. 11: jeweilige Ansichten, welche die Herstellung der Verbindungsanordnung der beiden Energieabsorptionselemente mit dem Stoßfängerquerträger mittels eines IHU-Spritzgießverfahren durch aktives Hydroclinchen zeigen;
- Fig. 12: eine schematische Schnittansicht der Verbindungsanordnung eines Energieabsorptionselements mit dem Stoßfängerquerträger durch Fließformschrauben;
- Fig. 13: eine schematische Draufsicht auf die Verbindungsanordnung des Stoßfängerquerträgers mit den beiden Energieabsorptionselementen, wobei jeweilige Hohlprofile durch Versteifungen und/oder Energieabsorptionselemente verstärkt sind;
- Fig. 14: eine schematische Draufsicht auf eine belastungsgerechte Konstruktion des Stoßfängerquerträgers;
- Fig. 15: eine Perspektivansicht der in ein Spritzgusswerkzeug eingelegten Strukturbauteile in Form des Stoßfängerquerträgers sowie der beiden Energieabsorptionselemente;
- Fig. 16: eine ausschnittsweise Perspektivansicht auf eine Rippenstruktur zwischen dem entsprechenden Energieabsorptionselement und dem korrespondierenden Stoßfängerquerträger, welche aus Kunststoff gebildet ist; und in
- Fig. 17: eine ausschnittsweise Perspektivansicht auf die Verbindungsanordnung des Stoßfängerquerträgers mit einem der Energieabsorptionselemente, wobei in die Rippenstruktur aus Kunststoff wenigstens ein Funktionsbauteil integriert ist.

In Fig. 1 ist in einer Perspektivansicht eine Verbindungsanordnung einer Mehrzahl von Strukturbauteilen in Form eines Stoßfängerquerträgers 10 sowie von zwei Energieabsorptionselementen 12, 14 für einen Personenkraftwagen dargestellt. Fig. 2 zeigt dabei den Stoßfängerquerträger 10 bei weggelassenen Energieabsorptionselementen 12, 14.

Aus Fig. 2 wird dabei erkennbar, dass der Stoßfängerquerträger 10 im Wesentlichen einen U-förmigen Querschnitt mit einem Obergurt 16, einem Untergurt 18 und einer hinteren Verbindungswand 20 umfasst, welche einstückig ausgebildet sind. Des Weiteren umfasst der Stoßfängerquerträger 10 zwei im Wesentlichen rechteckförmige Stecköffnungen 22, 24, in welche das jeweilige Energieabsorptionselement 12 bzw. 14 einsteckbar ist.

In Zusammenschau mit Fig. 3, welche den Stoßfängerquerträger 10 im Bereich einer der prinzipiell identisch ausgestalteten Stecköffnungen 22 zeigt, wird erkennbar, dass der Stoßfängerquerträger 10 im Bereich der Stecköffnung 22 eine Mehrzahl von Wandbereichen 26, 27, 28, 29 umfasst, welche in Erstreckungsrichtung des korrespondierenden Energieabsorptionselements 12 bzw. 14 verlaufen bzw. mit einem korrespondierenden Wandbereich des entsprechenden Energieabsorptionselements 12 bzw. 14 auf im Weiteren noch dargestellte Weise in Anlage sind. Der obere und der untere Wandbereich 26, 27 sind dabei im Wesentlichen im Querschnitt U-förmig gestaltet und am Obergurt 16 bzw. am Untergurt 18 des Stoßfängerquerträgers 10 abgestützt. Die Wandbereiche 28 und 29 sind einstückig an der Verbindungswand 20 des Stoßfängerquerträgers 10 angeordnet bzw. entsprechend umgeformt. In alle Wandbereiche sind - wie aus der Schnittdarstellung gemäß Fig. 3 erkennbar ist - jeweilige Löcher 30 eingebracht, welche auf im Weiteren noch näher dargestellte Weise zur Verbindung der Strukturbauteile 10, 12, 14 dienen.

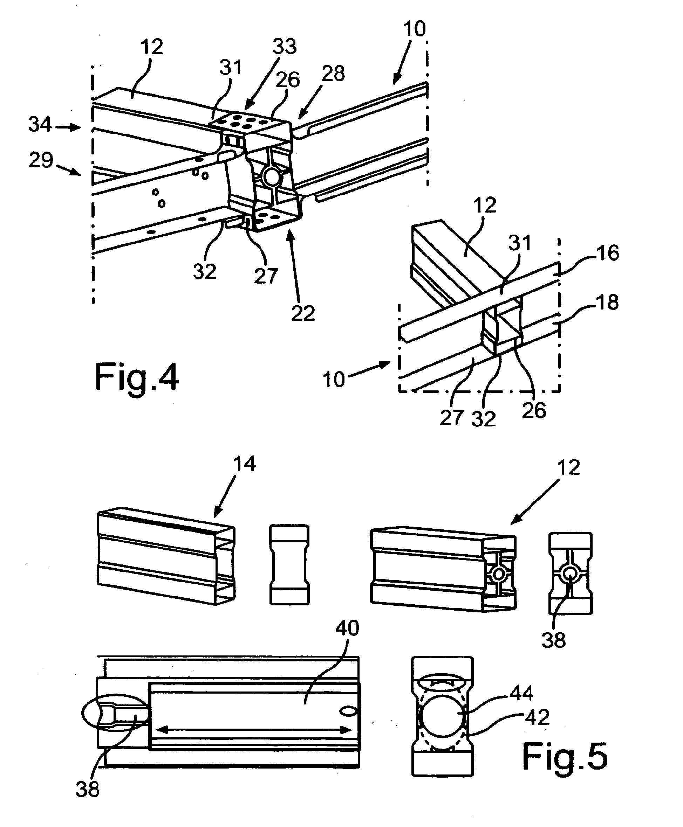

In Fig. 4 ist oben links in einer ausschnittsweisen Perspektivansicht erkennbar, dass die beiden Strukturbauteile - der Stoßfängerquerträger 10 und das Energieabsorptionselement in Form der Crashbox 12 vorliegend quer - und insbesondere senkrecht - zueinander angeordnet sind. Dabei ist das Energieabsorptionselement 12 in die korrespondierende, im Querschnitt angepasste Stecköffnung 22 eingesteckt, so dass die Wandbereiche 26 bis 29 des Stoßfängerquerträgers 10 an jeweiligen Wandbereichen 31, 32, 33, 34 des Energieabsorptionselements 12 anliegen. Das Energieabsorptionselement 12 ist dabei in etwa soweit in die korrespondierende Stecköffnung 22 eingesteckt, dass der Stoßfängerquerträger 10 und das Energieabsorptionselement 12 mit seiner Stirnseite nach vorne hin bündig abschließen.

In Fig. 4 rechts unten ist eine alternative Ausführungsform dargestellt, wobei bei dieser der Obergurt 16 und der Untergurt 18 des Stoßfängerquerträgers 10 im Wesentlichen die Wandbereiche 26 bzw. 27 bilden, welche mit den korrespondierenden Wandbereichen 31 und 32 des Stoßfängerquerträgers 10 in Anlage sind. Bei beiden Ausführungsbeispielen besteht der Stoßfängerquerträger 10 jedoch vorliegend aus einem Metallblech, insbesondere einem Aluminiumblech, welches auf entsprechend günstige Weise umgeformt werden kann.

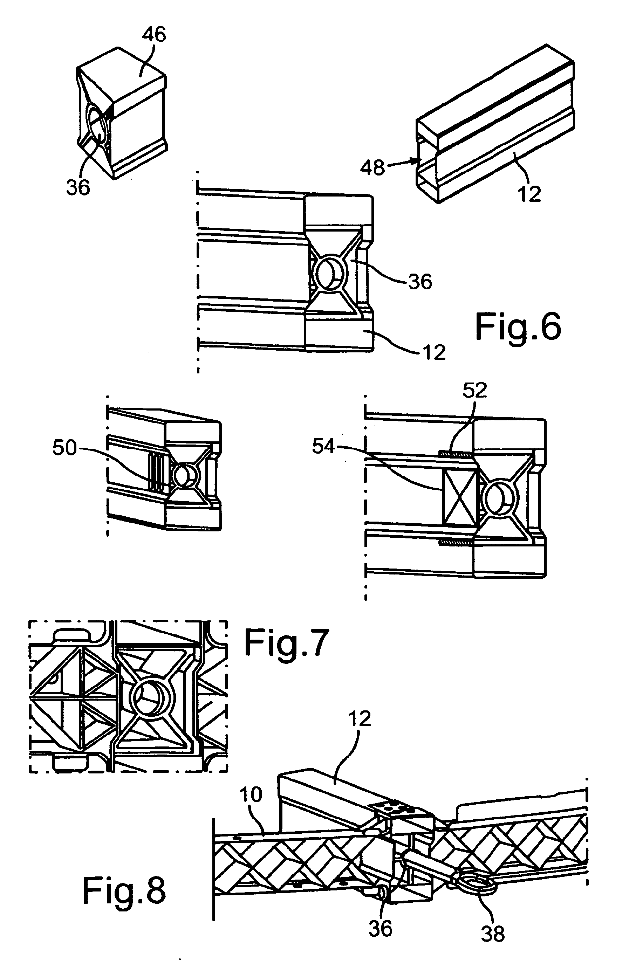

In Fig. 5 ist jeweils in einer schematischen Perspektivansicht sowie in einer Stirnansicht das entsprechende jeweilige Energieabsorptionselement 12, 14 dargestellt. Die beiden Energieabsorptionselemente sind vorliegend beispielsweise durch ein Strangpressverfahren hergestellt. Es gibt die Möglichkeit, die Crashboxen bzw. Energieabsorptionselemente 12, 14 in beliebiger Form und mit beliebigen Profilen herzustellen. Des Weiteren können in einem Zug gleich mehrere Crashboxen hergestellt und anschließend nachgearbeitet werden. Während die - in Vorwärtsfahrtrichtung betrachtet - linke Crashbox 14 ein Profil mit drei Hohlkammern aufweist umfasst die rechte Crashbox 12 sieben Kammern. Dies ist insbesondere deshalb der Fall, weil an der rechten Crashbox bzw. dem rechten Energieabsorptionselement 12 eine Abschleppöse 36 (Fig. 8) fixiert werden soll. Dazu wird die Crashbox 36 bzw. das Energieabsorptionselement 12 auf im Weiteren noch näher dargestellte Weise gefertigt und zusätzlich spanend bearbeitet. Für die Abschleppöse 36 wird an der rechten Crashbox bzw. dem rechten Energieabsorptionselement 12 eine Gewindenabe 38 vorgesehen und eine Führung 40 gefräst. Dies ist insbesondere auch aus den unteren Darstellungen von Fig. 5 erkennbar, wobei mit 42 ein Restverschnitt markiert ist und 44 einen Schaftfräser symbolisiert, wobei in drei Arbeitszyklen die Bearbeitung in diesem Bereich erfolgt. Somit wird auf der Gegenseite der Abschleppöse bzw. der Gewindenabe 38 Material zur Gewichtseinsparung ausgefräst.

Eine weitere Variante zur Abschleppösenanbringung ist in Fig. 6 dargestellt. Dabei wird erkennbar, dass vorliegend ein Strangpressprofil 46 die Abschleppöse 36 umfasst und in einen Hohlraum 48 des eigentlichen Energieabsorptionselements 12 eingebracht wird. Beide Bauteile können dabei als Aluminiumstrangpressprofile ausgebildet sein, wobei beim Fügen eine formschlüssige Verbindung durch ein Innenhochdruckumformverfahren oder eine stoffschlüssige Verbindung durch Schweißen hergestellt werden kann. Natürlich sind auch andere Verbindungsarten denkbar.

Fig. 7 zeigt dabei Querrillen 50 mittels welchen das Energieabsorptionselement 12 formschlüssig mit dem korrespondierenden Strangpressprofil verbunden werden kann. Alternativ hierzu sind Schweißnähte 52 bzw. Flächen 54 zum Schweißen erkennbar, mittels welchen das Energieabsorptionselement 12 und das Strangpressprofil 46 miteinander verbunden werden können. Bei einem Innenhochdruckumform-Strangpressprozess können dabei zudem die Querrillen - wie unten links dargestellt - mit Kunststoff 56 gefüllt werden. Des Weiteren kann wenigstens ein Strukturbauteil 10, 12, 14 mit Haltemitteln in Form von weiteren Sicken, Löchern, Durchgangsöffnungen, Erhebungen oder dgl. versehen sein, welches zur besseren Verbindung und Halterung des Kunststoffs 56 an bzw. mit dem jeweiligen Strukturbauteil 10, 12, 14 dienen.

Fig. 8 zeigt schließlich nochmals die gesamte Verbindungsanordnung des Stoßfängerquerträgers 10 mit dem korrespondierenden Energieabsorptionselement 12, wobei in die Gewindenabe 36 die Abschleppöse 38 eingeschraubt ist.

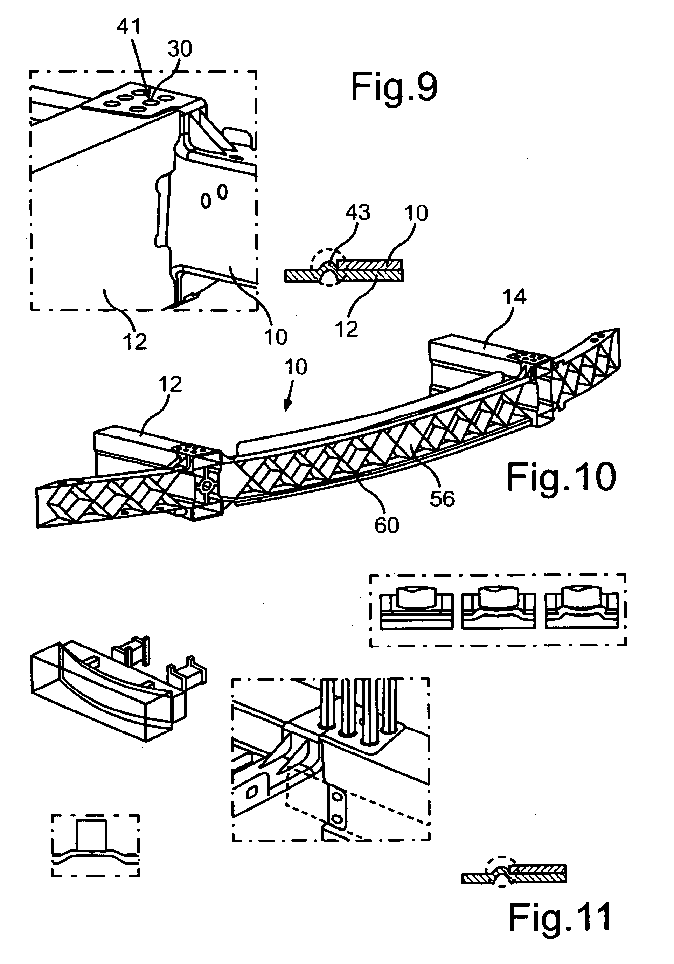

Fig. 9 zeigt nochmals in einer perspektivischen und ausschnittsweisen Rückansicht sowie in einer Schnittansicht hierzu die Verbindungsanordnung eines der Energieabsorptionselemente 12 an dem Stoßfängerquerträger 10 mittels Hydroclinchen. Dabei wird erkennbar, dass im Bereich der Löcher 30 der jeweiligen Wandbereiche 26 - 29 des Stoßfängerquerträgers 10 jeweilige formschlüssige Verbindungen 41 ausgebildet sind, welche durch entsprechendes Innenhochdruckumformen bzw. Hydroclinchen der korrespondierenden Wandbereiche 31 - 34 des entsprechenden Energieabsorptionselements 12 erzeugt worden sind. Zudem ist aus der Schnittansicht eine nach außen stehende Sicke 43 des Energieabsorptionselements 12 erkennbar, welche den korrespondierenden Wandbereich des Stoßfängerquerträgers 10 unter Ausbildung einer formschlüssigen Verbindung 41 hintergreift.

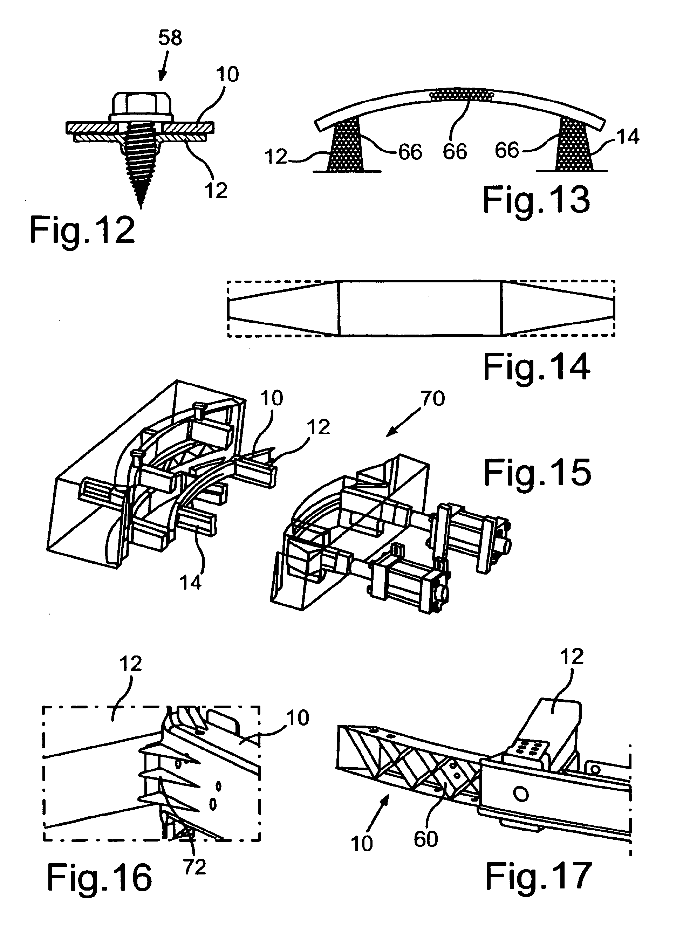

Fig. 12 zeigt des Weiteren, dass das Energieabsorptionselement 12 an dem Stoßfängerquerträger 10 nicht nur durch aktives oder passives Hydroclinchen sowie durch die Querrillen 50 verbunden sein kann, sondern nachträglich beispielsweise auch zusätzlich durch Fließformschrauben 58.

Insgesamt ist somit aus den Figuren 1 bis 9 und 12 erkennbar, dass vorliegend eine Verbindungsanordnung von im Wesentlichen drei Strukturbauteilen - dem Stoßfängerquerträger 10 sowie den Energieabsorptionselementen 12, 14 geschaffen ist, wobei die Energieabsorptionselemente 12, 14 in die zugehörigen Stecköffnungen 22, 24 eingesteckt werden und anschließend die jeweiligen Wandbereiche 31 bis 34 der jeweiligen Energieabsorptionselemente 12, 14 unter Herstellung jeweils wenigstens einer formschlüssigen Verbindung mit dem jeweils korrespondierenden Wandbereich 26 bis 29 des Stoßfängerquerträgers 10 verbunden werden. Im vorliegenden Fall geschieht dies im Rahmen eines kombinierten Innenhochdruckumform- und Spritzgießprozesses, wobei durch Hydroclinchen die entsprechenden Wandbereiche 31 bis 34 des jeweiligen Energieabsorptionselementes 12, 14 so umgeformt, werden, dass sich jeweils eine formschlüssige Verbindung mit den jeweiligen Löchern 30 in den Wandbereichen 26 bis 29 des Stoßfängerquerträgers 10 ergibt.

Im Anschluss daran werden bei dem in Fig. 11 dargestellten kombinierten Innenhochdruck- Spritzgießverfahren entsprechende Teilbereiche der geschaffenen Verbindungsanordnung der drei Strukturbauteile 10, 12, 14 mit dem Kunststoff 56 versehen. Im Einzelnen wird dabei beispielsweise der U-förmige Querschnitt des Stoßfängerquerträgers 10 - insbesondere aus den Figuren 1, 2 und 10 erkennbar ist - mit entsprechenden Rippen 60 versehen. Zudem dient der Kunststoff 56 zur weiteren Verbindung der jeweiligen Strukturbauteile 10, 12, 14 wie im Zusammenhang mit Fig. 11 beschrieben worden ist. Durch das Umspritzen mit Kunststoff 56 lassen sich dabei leichte Strukturbauteile mit hoher Festigkeit, Steifigkeit und Strukturintegrität schaffen.

Wie zudem insbesondere aus Fig. 1 erkennbar ist, kann der Stoßfängerquerträger 10 mit einem Deckelelement 62 aus Metallblech versehen werden. Zudem können entsprechende Blindnietmuttern zum Einsatz kommen, mittels welchen das Deckelelement 62 oder andere Bauteile befestigt werden können.

Eine zusätzliche Möglichkeit für die Integration von anderen Bauteilen ist es, dass insbesondere im Bereich des Kunststoffs 56 wenigstens ein Funktionsbereich zur Halterung eines anderen Bauteils angeordnet oder aber ein Funktionsbauteil direkt integriert wird. Beispielsweise können Flansche zur Befestigung von Anbauteilen der Distronik, von Streben oder - Frontend- Streben vorgesehen sein. Auch Clipse können vorgesehen werden. Darüber hinaus können einzelne Bauteile - wie beispielsweise die Blindnieten - in den Kunststoff 56 integriert werden. Darüber hinaus können die Strukturbauteile 10, 12, 14 entsprechende Haltemittel wie beispielsweise Durchgangslöcher, Sicken, Laschen oder dergleichen aufweisen, um damit eine verbesserte Verbindung zwischen dem Kunststoff 56 und dem jeweiligen Strukturbauteil 10, 12, 14 zu erhalten.

In Fig. 13 ist es weiterhin erkennbar, dass in ein Hohlprofil des jeweiligen Strukturbauteils 10, 12, 14 eine Versteifung und/oder ein Energieabsorptionselement 66 eingebracht sein kann. Beispielsweise kann als Energieabsorptionselement 66 ein lokaler Schaum, beispielsweise ein APM-Schaum vorgesehen sein, und zwar insbesondere im Bereich der Crashboxen bzw. in der Mitte des Stoßfängerquerträgers 10. Dieses Energieabsorptionselement 10 kann dabei bei einer unfallbedingten Kraftbeaufschlagung für ein entsprechend günstiges Crashverhalten des Frontendmoduls sorgen. Dabei ist klar, dass der Energieabsorptionsschaum sowohl in flüssiger Form als auch in fester Form in das jeweilige Hohlprofil eingebracht werden kann.

Fig. 14 zeigt des Weiteren, dass man den Vorteil der Blechbauweise beim Stoßfängerquerträger 10 beispielsweise dadurch nutzen kann, dass die Enden schmaler hergestellt sind, da dort die Belastungen entsprechend geringer sind.

Der Herstellprozess der Verbindungsanordnung läuft nun folgendermaßen ab:
Der Stoßfängerquerträger 10 wird zunächst aus einem Aluminiumblech, wie dieses in Fig. 2 erkennbar ist, zugeschnitten. In das Aluminiumblech werden Durchspritzpunkte für den Kunststoff 56 gestanzt und gleichzeitig mit einer Vertiefung für die jeweiligen Kunststoffrippen versehen. Anschließend wird das Aluminiumblech gebogen und mit einer Sicke versehen. Für die Verbindung des jeweiligen Energieabsorptionselements 12, 14 mit dem Stoßfängerquerträger 10 werden an diesem die Stegöffnungen 22, 24 bzw. Mittelfenster durch Stanzen und Biegen gefertigt und die Löcher 30 für das aktive Hydroclinchen hergestellt.

Wie aus Fig. 15 erkennbar ist, werden in das Blechteil des Stoßfängerquerträgers 10 die Energieabsorptionselemente 12, 14 eingesteckt und die vorgefertigte Verbindungsanordnung in die Spritzgussanlage 70 eingelegt. In einem Schritt werden die Bauteile mit dem Innenhochdruckumform- Spritzgießverfahren mit Kunststoff umspritzt und miteinander verbunden. Dabei werden die formschlüssigen Verbindungen zwischen den Wandbereichen 31 bis 34 der jeweiligen Energieabsorptionselemente 12, 14 mit den Wandbereichen 26 bis 29 des jeweiligen Stoßfängerquerträgers im Bereich der Löcher 30 geschaffen. Dies erfolgt durch passives Hydroclinchen. Zusätzlich werden durch den Kunststoff 56 die Rippen 60 angespritzt. Aus Fig. 11 ist dabei erkennbar, dass durch Innenhochdruckumformen im Bereich der Löcher 30 die formschlüssigen Verbindungen erzeugt werden. Dies kann beispielsweise auch durch aktives Hydroclinchen erfolgen.

Das Deckelelement 62 wird nachträglich angebracht und der Deckel wird durch Warmnieten an der Rippenstruktur und durch Clinchkleben im Flansch an den Stoßfängerquerträger 10 angebunden. Dabei kann das Deckelelement 62 anstatt durch Kleben auch durch Laserschweißen an dem Stoßfängerquerträger 10 angebunden werden. Die Enden des Stoßfängerquerträgers 10 im Anbindungsbereich an das jeweilige Energieabsorptionselement 12, 14 können zusätzlich durch Rippenstrukturen 72 verstärkt werden.

Insgesamt ist somit erkennbar, dass mittels der vorliegenden Verbindungsanordnung mehrere senkrecht zueinander verbundene Strukturteile 12, 14, 16 hochsteif und genau miteinander zu verbinden sind. Dies führt nicht nur zu einer Gewichts- und Kostenreduzierung, sondern auch zu einer hohen Steifigkeit, Festigkeit und Strukturintegrität im Falle eines Unfalls. Durch die Verwendung von Spritzgießverfahren wird eine hohe Bauteilgenauigkeit erreicht, wobei durch das Innenhochdruckumform- und Spritzgießverfahren wenige Herstellungsschritte erforderlich sind. Zudem kann vorliegend nicht nur die Abschleppöse 36 in das Bauteil integriert sein, sondern eine Mehrzahl von Funktionselementen, welche insbesondere in dem Kunststoff 56 aufgenommen sind.

## Patentansprüche

1. Verbindungsanordnung von einem Stoßfängerquerträger (10) und wenigstens einem Energieabsorptionselement (12,14), für einen Kraftwagen, wobei der Stoßfängerquerträger (10) eine Stecköffnung (22, 24) aufweist, in welche das Energieabsorptionselement (12, 14) einsteckbar ist, und wobei der Stoßfängerquerträger (10) im Bereich seiner Stecköffnung (22, 24) wenigstens einen Wandbereich (26, 27, 28, 29) aufweist, welcher mit einem korrespondierenden Wandbereich (31, 32, 33, 34) des Energieabsorptionselements (12, 14) in Anlage ist, wobei die jeweiligen Wandbereiche (26, 27, 28, 29, 31, 32, 33, 34) des Stoßfängerquerträgers und des Energieabsorptionselements (10, 12, 14) über wenigstens eine formschlüssige Verbindung (41) miteinander fest verbunden sind,
**dadurch gekennzeichnet, dass**
**der jeweilige wenigstens eine Wandbereich (26, 27, 28, 29) des Stoßfängerquerträgers (10) Löcher (30) aufweist und im Bereich dieser Löcher (30) jeweilige formschlüssige Verbindungen (41) ausgebildet sind, welche durch entsprechendes Innenhochdruckumformen bzw. Hydroclinchen des korrespondierenden Wandbereichs (31, 32, 33, 34) des Energieabsorptionselements (12,14) erzeugt worden sind.**

2. Verbindungsanordnung nach Anspruch 1,
**dadurch gekennzeichnet, dass**
der Stoßfängerquerträger (10) einen im Wesentlichen U-förmigen Querschnitt aufweist.

3. Verbindungsanordnung nach einem der vorhergehenden Ansprüche,
**dadurch gekennzeichnet, dass**
der Stoßfängerquerträger und das Energieabsorptionselement (10, 12, 14) im Wesentlichen senkrecht zueinander angeordnet sind.

4. Verbindungsanordnung nach einem der vorhergehenden Ansprüche,
**dadurch gekennzeichnet, dass**
wenigstens der Stoßfängerquerträger (10) zumindest partiell mit Kunststoff (56) versehen ist.

5. Verbindungsanordnung nach Anspruch 4,
**dadurch gekennzeichnet, dass**
wenigstens der Stoßfängerquerträger (10) mit Haltemittel für den Kunststoff (56) versehen ist.

6. Verbindungsanordnung nach Anspruch 4 oder 5,
**dadurch gekennzeichnet, dass**
in den Kunststoff (56) wenigstens ein Funktionsbauteil integriert ist.

7. Verbindungsanordnung nach einem der vorhergehenden Ansprüche,
**dadurch gekennzeichnet, dass**
in den Stoßfängerquerträger oder das Energieabsorptionselement (10, 12, 14) eine Gewindenabe (38) für eine Abschleppöse (36) eingebracht ist.

8. Verbindungsanordnung nach einem der vorhergehenden Ansprüche,
**dadurch gekennzeichnet, dass**
in ein Hohlprofil des Stoßfängerquerträgers und/oder des Energieabsorptionselements (10, 12, 14) eine Versteifung und/oder ein Energieabsorptionselement (66) integriert ist.

9. Verfahren zum Herstellen einer Verbindungsanordnung von einem Stoßfängerquerträger (10) und wenigstens einem Energieabsorptionselement (12,14) für einen Kraftwagen, wobei in eine Stecköffnung (22, 24) des Stoßfängerquerträgers (10) das Energeiabsorptionselement (12, 14) eingesteckt wird, wodurch der Stoßfängerquerträger (10) im Bereich seiner Stecköffnung (22, 24) mit wenigstens einem Wandbereich (26, 27, 28, 29,) mit einem korrespondierenden Wandbereich (31, 32, 33, 34) des Energieabsorptionselements (12, 14) in Anlage kommt, wobei die jeweiligen Wandbereiche (26, 27, 28, 29, 31, 32, 33, 34) des Stoßfängerquerträgers und des Energieabsorptionselements (10, 12, 14) über wenigstens eine formschlüssige Verbindung (41) miteinander fest verbunden werden,
**dadurch gekennzeichnet, dass**
**der jeweilige Wandbereich (26, 27, 28, 29) des Stoßfängerquerträgers (10) Löcher (30) aufweist und im Bereich dieser Löcher (30) jeweilige formschlüssige Verbindungen (41) ausgebildet werden, welche durch entsprechendes Innenhochdruckumformen bzw. Hydroclinchen des korrespondierenden Wandbereichs (31, 32, 33, 34) des Energieabsorptionselements (12,14) erzeugt werden.**

## Claims

1. Connection arrangement of a bumper bracket (10) and at least one energy absorption element (12, 14) for a motor vehicle, wherein the bumper bracket (10) has a plug-in opening (22, 24) into which the energy absorption element (12, 14) can be inserted, and wherein the bumper bracket (10) has in the region of its plug-in opening (22, 24) at least one wall region (26, 27, 28, 29) which is in contact with a corresponding wall region (31, 32, 33, 34) of the energy absorption element (12, 14), the respective wall regions (26, 27, 28, 29, 31, 32, 33, 34) of the bumper bracket and the energy absorption element (10, 12, 14) being permanently joined to one another by at least one positive connection (41),
**characterised in that**
the respective at least one wall region (26, 27, 28, 29) of the bumper bracket (10) has holes (30), and **in that** in the region of these holes (30) respective positive connections (41) are formed, which have been produced by suitable hydroforming or hydroclinching of the corresponding wall region (31, 32, 33, 34) of the energy absorption element (12, 14).

2. Connection arrangement according to claim 1,
**characterised in that**
the bumper bracket (10) has a substantially U-shaped cross-section.

3. Connection arrangement according to any of the preceding claims,
**characterised in that**
the bumper bracket and the energy absorption element (10, 12, 14) are arranged substantially perpendicular to one another.

4. Connection arrangement according to any of the preceding claims,
**characterised in that**
at least the bumper bracket (10) is at least partially provided with a plastic material (56).

5. Connection arrangement according to claim 4,
**characterised in that**
at least the bumper bracket (10) is provided with retaining means for the plastic material (56).

6. Connection arrangement according to claim 4 or 5,
**characterised in that**
at least one functional component is integrated into the plastic material (56).

7. Connection arrangement according to any of the preceding claims,
**characterised in that**
a threaded hub (38) for a towing lug (36) is provided in the bumper bracket or the energy absorption element (10, 12, 14).

8. Connection arrangement according to any of the preceding claims,
**characterised in that**
a reinforcement and/or an energy absorption element (66) is/are integrated into a hollow section of the bumper bracket and/or the energy absorption element (10, 12, 14).

9. Method for producing a connection arrangement of a bumper bracket (10) and at least one energy absorption element (12, 14) for a motor vehicle, wherein the energy absorption element (12, 14) is inserted into a plug-in opening (22, 24) of the bumper bracket (10), whereby the bumper bracket (10) is in the region of its plug-in opening (22, 24) with at least one wall region (26, 27, 28, 29) brought into contact with a corresponding wall region (31, 32, 33, 34) of the energy absorption element (12, 14), wherein the respective wall regions (26, 27, 28, 29, 31, 32, 33, 34) of the bumper bracket and the energy absorption element (12, 14) are permanently joined to one another by at least one positive connection (41),
**characterised in that**
the respective wall region (26, 27, 28, 29) of the bumper bracket (10) has holes (30), and **in that** in the region of these holes (30) respective positive connections (41) are formed, which are produced by suitable hydroforming or hydroclinching of the corresponding wall region (31, 32, 33, 34) of the energy absorption element (12, 14).

## Revendications

1. Agencement de liaison d'une traverse (10) de pare-chocs et d'au moins un élément d'absorption d'énergie (12, 14) pour un véhicule automobile, la traverse (10) de pare-chocs présentant une ouverture d'emboîtement (22, 24) dans laquelle l'autre élément d'absorption d'énergie (12, 14) peut être emboîté, et la traverse (10) de pare-chocs présentant dans la zone de son ouverture d'emboîtement (22, 24) au moins une zone de paroi (26, 27, 28, 29) laquelle vient en butée avec une zone de paroi (31, 32, 33, 34) correspondante de l'élément d'absorption d'énergie (12, 14), chacune des zones de paroi (26, 27, 28, 29, 31, 32. 33, 34) de la traverse (10) de pare-chocs et de l'élément d'absorption d'énergie (10, 12, 14) étant reliées les unes aux autres de manière fixe par une liaison (41) par complémentarité de forme, **caractérisé en ce que** la ou les zones de paroi (26, 27, 28, 29) de la traverse (10) de pare-chocs présente(nt) des trous (30) et **en ce que** dans la zone de ces trous (30) sont conçues des liaisons (41) par complémentarité de forme, lesquelles ont été fabriquées par moulage à haute pression intérieur correspondant ou par hydroclinchage de la zone de paroi (31, 32, 33, 34) correspondante de l'élément d'absorption d'énergie (12, 14).

2. Agencement de liaison selon la revendication 1, **caractérisé en ce que** la traverse (10) de pare-chocs présente une section transversale essentiellement en forme de U.

3. Agencement de liaison selon l'une quelconque des revendications précédentes, **caractérisée en ce que** la traverse de pare-chocs et l'élément d'absorption d'énergie (10, 12) sont essentiellement perpendiculaires l'un par rapport à l'autre.

4. Agencement de liaison selon l'une quelconque des revendications précédentes, **caractérisé en ce qu'**au moins la traverse (10) de pare-chocs est pourvue au moins partiellement de matière plastique (56).

5. Agencement de liaison selon la revendication 4, **caractérisé en ce qu'**au moins la traverse (10) de pare-chocs est pourvue de moyen de retenue pour la matière plastique (56).

6. Agencement de liaison selon la revendication 4 ou 5, **caractérisé en ce que** dans la matière plastique (56) est intégré au moins un composant fonctionnel.

7. Agencement de liaison selon l'une quelconque des revendications précédentes, **caractérisée en ce que** dans les traverses de pare-chocs ou l'élément d'absorption d'énergie (10, 12, 14) est appliqué un moyeu fileté (38) destiné à un oeillet de remorquage (36).

8. Agencement de liaison selon l'une quelconque des revendications précédentes, **caractérisée en ce que** dans un profilé creux de la traverse de pare-chocs et/ou de l'élément d'absorption d'énergie (10, 12, 14) est intégré un renfort et/ou un élément d'absorption d'énergie (66).

9. Procédé de fabrication d'un agencement de liaison d'une traverse (10) de pare-chocs et d'au moins un élément d'absorption d'énergie (12, 14) pour un véhicule automobile, dans une ouverture d'emboîtement (22, 24) de la traverse (10) de pare-chocs étant emboîté l'élément d'absorption d'énergie (12, 14), la traverse (10) de pare-chocs dans la zone de son ouverture d'emboîtement (22, 24) avec au moins une zone de paroi (26, 27, 28, 29) venant en butée avec une zone de paroi (31, 32, 33, 34) correspondante de l'élément d'absorption d'énergie (12, 14), les zones de paroi (26, 27, 28, 29, 31, 32, 33, 34) de la traverse de pare-chocs et de l'élément d'absorption d'énergie (10, 12, 14) étant reliées les unes aux autres de manière fixe par au moins une liaison (41) par complémentarité de forme, **caractérisé en ce que** la zone de paroi (26, 27, 28, 29) de la traverse (10) de pare-chocs présente des trous (30) et dans la zone de ces trous (30) sont conçues des liaisons (41) par complémentarité de forme, lesquelles ont été fabriquées par moulage à haute pression intérieur correspondant ou par hydroclinchage de la zone de paroi (31, 32, 33, 34) correspondante de l'élément d'absorption d'énergie (12, 14).
